# EUROPÄISCHE PATENTSCHRIFT

(11) **EP 3 335 541 B1**
(45) Veröffentlichungstag und Bekanntmachung des Hinweises auf die Patenterteilung: **19.02.2020**
(21) Anmeldenummer: 17186410.1
(22) Anmeldetag: 16.08.2017
(51) Int. Cl.: A01D 41/127, A01D 41/14, A01D 34/28

(54) **VERFAHREN ZUM BETREIBEN EINES SCHNEIDWERKS**
METHOD FOR OPERATING A CUTTING UNIT
PROCÉDÉ DE FONCTIONNEMENT D'UNE BARRE DE COUPE

(30) Priorität: 15.12.2016 DE 102016124552
(43) Veröffentlichungstag der Anmeldung: 20.06.2018
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Wielenberg, Andreas, 32049 Herford (DE); Beschorn, Udo, 33428 Harsewinkel (DE)
(74) Vertreter: CLAAS Gruppe

(56) Entgegenhaltungen:
- EP-A1- 2 832 206
- EP-A2- 3 087 819
- US-A- 5 359 836
- US-B1- 7 975 458

## Beschreibung

Die vorliegende Erfindung betrifft ein Verfahren zum Betreiben eines Schneidwerks gemäß dem Oberbegriff des Anspruches 1. Weiterhin betrifft die Erfindung ein Schneidwerk gemäß dem Oberbegriff des Anspruches 11 sowie einen Mähdrescher gemäß dem Anspruch 15.

Aus dem Stand der Technik ist es bekannt, Schneidwerke, die mit Förderbändern zum Ernteguttransport ausgestattet sind, so genannte Draper, mit einem in Abhängigkeit von Erntebedingungen starr oder flexibel betriebenen Messerbalken, in zumindest zwei unterschiedlichen Betriebsmodi zu betreiben. Für das Ernten von Getreide wird das Schneidwerk mit starr betriebenem Messerbalken in einer voreingestellten Schnitthöhe, das heißt einer vorgebbaren Höheneinstellung, über den Boden geführt. Dabei wird auf Änderungen des Abstands zwischen dem Boden und dem Messerbalken des Schneidwerks in der Weise reagiert, dass das Schneidwerk in seinem Abstand zum Boden kontinuierlich angepasst wird. Hierzu weist das Schneidwerk eine erste, deaktivierbar an dem Schneidwerk angeordnete, Sensoranordnung zum Betreiben des Schneidwerks in diesem ersten Betriebsmodus auf. Die erste Sensoranordnung ist hierbei als eine Mehrzahl von an der Unterseite des Schneidwerks angeordneten Sensorarmen oder Tastbügeln ausgebildet, die in unmittelbarer Nähe hinter dem Messerbalken angeordnet sind.

Einen zweiten Betriebsmodus stellt das flexible Betreiben des Messerbalkens dar, welcher auf dem Boden aufliegt, um der Bodenkontur zu folgen, während der Schneidwerksrahmen des Schneidwerks in einem vorgegebenen Abstand zum Boden geführt wird. Hierzu umfasst das Schneidwerk eine zweite Sensoranordnung zum Betreiben des Schneidwerks in dem zweiten Betriebsmodus. Der Wechsel zwischen diesen beiden Betriebsmodi erfordert die Deaktivierung der ersten Sensoranordnung, beispielsweise durch Demontage der Tastbügel oder durch das manuelle Überführen der Tastbügel in eine Parkposition, sowie die anschließende Kalibrierung einer Steuerungsvorrichtung mittels der eine Aktorik angesteuert wird, welche den vorgegebenen Abstand zwischen Schneidwerk bzw. Schneidwerksrahmen und Boden konstant hält. Der Wechsel von dem ersten Betriebsmodus in den zweiten Betriebsmodus und zurück ist wegen der manuellen Deaktivierung bzw. Aktivierung, die jeweils mit einer Betriebsunterbrechung einhergeht, sowie des jeweils durchzuführenden Kalibrierprozesses zeitaufwendig.

Die Druckschrift EP 2 832 206 A1 offenbart ein Vorsatzgerät, bei dem ein Schneidwerk entweder in einem Neigungssteuerungsmodus, in dem eine Seitenneigungssteuerung aktiviert ist, oder in einem freien Schwebemodus, in dem die Seitenneigungssteuerung umgangen wird, betreibbar ist. Die Druckschrift US 5,359,836 offenbart ein Vorsatzgerät, welches mit einer durch einen Zylinder einstellbaren Kraft auf den Boden gedrückt wird. Die Druckschrift US 7,975,458 B1 offenbart ein Schneidwerk, welches mit zwei unterschiedlichen Sensoranordnungen in zwei unterschiedlichen Betriebsmodi betrieben wird.

Es ist daher die Aufgabe der vorliegenden Erfindung, ein Verfahren zum Betreiben eines Schneidwerks sowie ein Schneidwerk bereitzustellen, um flexibler auf sich ändernde Erntebedingungen reagieren zu können.

Diese Aufgabe wird erfindungsgemäß durch ein Verfahren gemäß dem Anspruch 1 sowie ein Schneidwerk gemäß dem Anspruch 11 gelöst. Weiterhin wird diese Aufgabe durch einen Mähdrescher gemäß dem Anspruch 15 gelöst.

Vorteilhafte Ausgestaltungen sind den jeweiligen auf die unabhängigen Ansprüche zurückbezogenen Unteransprüchen zu entnehmen.

Gemäß dem Anspruch 1 wird vorgeschlagen, dass bei einem Wechsel zwischen den zumindest zwei Betriebsmodi in Abhängigkeit von dem gewählten Betriebsmodus die erste Sensoranordnung oder die zweite Sensoranordnung betriebsunterbrechungsfrei zur Durchführung einer Abstandsbestimmung aktiviert wird. Das erfindungsgemäße Verfahren sieht das gleichzeitige Betreiben der beiden Sensoranordnungen vor, wobei entsprechend des gewählten Betriebsmodus entweder nur von der ersten Sensoranordnung oder nur von der zweiten Sensoranordnung bereitgestellte Eingangssignale zur Höhensteuerung des Schneidwerks verarbeitet werden. Es bedarf somit nicht der manuellen Deaktivierung durch die Demontage bzw. das Überführen in eine Parkposition der an dem Schneidwerk angeordneten ersten Sensoranordnung, um einen Betriebsmodus-wechsel vom ersten in den zweiten Betriebsmodus durchzuführen, wie es gemäß dem Stand der Technik erforderlich ist, was mit einer Betriebsunterbrechung einhergeht. Entsprechendes gilt bei einem Wechsel vom zweiten in den ersten Betriebsmodus, der erfindungsgemäß gleichfalls betriebsunterbrechungsfrei durchgeführt wird, während es gemäß dem Stand der Technik der erneuten Montage bzw. des Rückführens des Tastbügels aus der Parkposition bedarf.

Die erste Sensoranordnung kann als eine den Boden mechanisch abtastende Vorrichtung ausgeführt sein, welche beispielsweise Tastbügel, Tastkufen oder dergleichen umfasst. Alternativ kann die erste Sensoranordnung auch als eine berührungslos arbeitende Vorrichtung ausgeführt sein, welche den Abstand zum Boden erfasst. Die zweite Sensoranordnung kann als in das Schneidwerk, insbesondere den Schneidwerksrahmen, integrierte Vorrichtung ausgeführt sein, welche direkt oder indirekt Abstandsänderungen zum Boden erfasst. Das Verfahren erlaubt es, während des laufenden Ernteprozesses zwischen den zumindest zwei Betriebsmodi zu wechseln, um auf geänderte Erntebedingungen flexibel, schnell und ohne Unterbrechung des Ernteprozesses reagieren zu können. Gegenüber dem Stand der Technik entfällt das manuelle Deaktivieren der ersten Sensoranordnung ebenso wie das wiederholte Kalibrieren der ersten oder zweiten Sensoranordnung nach einer manuellen Aktivierung der ersten Sensoranordnung zur Durchführung der Betriebsmodiwechsel. Das Verfahren ist sowohl für Bandschneidwerke als auch für Getreideschneidwerke mit flexiblem Messerbalken anwendbar.

Vorteilhaft ist es, dass der Kalibriervorgang für die erste Sensoranordnung und die zweite Sensoranordnung unabhängig von dem gewählten Betriebsmodus ausgeführt wird. Dabei kann der Kalibriervorgang für die erste Sensoranordnung und die zweite Sensoranordnung sequentiell ausgeführt werden. Hierzu kann der Kalibriervorgang nach einem erfolgten Anbau an eine Erntemaschine, insbesondere an einen Mähdrescher, initiiert werden, um die erste Sensoranordnung und die zweite Sensoranordnung zu kalibrieren. Dabei kann in einem vorgelagerten Schritt das Vorhandensein der an dem Schneidwerk angeordneten ersten Sensoranordnung überprüft werden. Weiterhin kann in einem vorangehenden Schritt der Messerbalken automatisch hydraulisch entspannt werden. Zwecks Kalibrierung können die oberen und unteren Grenzen von Positionssensoren der ersten und weiten Sensoranordnung ermittelt werden. Die durch den Kalibriervorgang ermittelten Daten für die erste Sensoranordnung und die zweite Sensoranordnung werden in einer Steuerungsvorrichtung hinterlegt, so dass diese bei einem Wechsel zwischen den Betriebsmodi jederzeit zur Verfügung stehen.

Alternativ kann die Kalibrierung der ersten Sensoranordnung und der zweiten Sensoranordnung unabhängig voneinander durchgeführt werden. Das heißt, dass der Kalibriervorgang zunächst nur für die zweite Sensoranordnung durchgeführt wird, weil beispielsweise eine zumindest teilweise lösbar angeordnete erste Sensoranordnung zum Zeitpunkt der Initiierung des Kalibriervorgangs nicht an dem Schneidwerk angeordnet ist. Entsprechend kann nach der Anbringung der ersten Sensoranordnung der Kalibriervorgang nur für diese separat durchgeführt werden. Wie zuvor ausgeführt, werden die mittels des Kalibriervorgangs ermittelten Daten für die erste Sensoranordnung und die zweite Sensoranordnung in einer Steuerungsvorrichtung hinterlegt, so dass diese bei einem Wechsel zwischen den Betriebsmodi jederzeit zur Verfügung stehen.

Insbesondere kann in dem ersten Betriebsmodus, in welchem das Schneidwerk mit starrem Messerbalken betrieben wird, die erste Sensoranordnung aktiviert werden, durch die eine vorgegebene Höheneinstellung des Schneidwerks gesteuert oder geregelt wird. Zum starren Betreiben des Messerbalkens kann dieser mittels einer Aktorik hydraulisch vorgespannt werden.

Weiterhin kann in dem zweiten Betriebsmodus, in welchem das Schneidwerk mit flexiblem Messerbalken betrieben wird, die zweite Sensoranordnung aktiviert werden, durch die eine vorgegebene Höheneinstellung des Schneidwerkrahmens des Schneidwerkes gesteuert oder geregelt wird. Zum flexiblen Betreiben des Messerbalkens kann dieser durch eine entsprechende Ansteuerung der Aktorik hydraulisch entspannt werden.

So kann während des Erntevorganges in dem ersten Betriebsmodus, in welchem der Messerbalken starr betrieben wird, um stehendes Getreide zu ernten, die Situation auftreten, das sich zwischen dem stehenden Getreide Lagerstellen befinden, die einen Schnitt unmittelbar oberhalb des Bodens erfordern, das heißt unterhalb der voreingestellten Schnitthöhe. Hierzu lässt sich von dem ersten Betriebsmodus in den zweiten Betriebsmodus wechseln, in welchem der Messerbalken flexibel betrieben wird, um diesen auf den Boden aufzulegen, während der Schneidwerksrahmen in einem vorgebaren Abstand zum Boden geführt wird. In dieser Situation wird die erste Sensoranordnung deaktiviert, das heißt die von der ersten Sensoranordnung generierten Signale werden nicht verarbeitet, um die Abstandsregelung durchzuführen. Stattdessen wird mit dem Wechsel in den zweiten Betriebsmodus die bis dahin inaktive zweite Sensoranordnung aktiviert, um von der zweiten Sensoranordnung generierte Signale zu verarbeiten, welche zur Abstandsregelung bzw. Höhensteuerung des Schneidwerks verwendet werden. Die beiden Sensoranordnungen können übergreifend arbeiten, so dass ein schneller Wechsel zwischen den Betriebsmodi und eine Kombinierbarkeit möglich sind. Zur Verbesserung der Verfahrensabläufe bietet sich auch das Einbeziehen eines Entlastungssystems des flexiblen Messerbalkens in den Steuer- oder Regelprozess an.

Bevorzugt kann bei einem Betreiben des Schneidwerkes oberhalb der vorgegebenen Höheneinstellung der Messerbalken unabhängig von dem ausgewählten Betriebsmodus automatisch in einen starren Zustand überführt werden. Dies ist beispielsweise bei einem Erreichen eines Vorgewendes sinnvoll, da in dieser Situation das Schneidwerk angehoben wird. Dies gewährleistet einen optimalen bzw. minimalen Abstand zwischen Haspel und Schneidwerkstisch und erlaubt der Haspel den Gutfluss optimal zu unterstützen.

Weiterhin kann bei einem Betreiben des Schneidwerkes mit flexibel betriebenem Messerbalken oberhalb der vorgegebenen Höheneinstellung die erste Sensoranordnung zeitabhängig aktiviert werden. Dies ist vorteilhaft, wenn am Ende eines Vorgewendes das Schneidwerk zum Einsetzen in das abzuerntende Feld erfolgt, da die erste Sensoranordnung bereits mit dem Boden in Berührung kommt, bevor die zweite Sensoranordnung ein Signal generieren kann.

Insbesondere kann bei einem Betreiben des Schneidwerkes unterhalb eines Schwellwertes der vorgegebenen Höheneinstellung der Messerbalken unabhängig von dem ausgewählten Betriebsmodus automatisch in einen flexiblen Zustand überführt werden.

Des Weiteren kann bei einem Betreiben des Schneidwerkes mit flexibel betriebenem Messerbalken unterhalb eines Schwellwertes der vorgegebenen Höheneinstellung die zweite Sensoranordnung zeitabhängig aktiviert werden. Diese Funktion unterstützt ebenfalls beim Wiedereinsetzen des Vorsatzes in den Bestand, da der Messerbalken erst kurz vor dem Boden entspannt wird. Dadurch werden bspw. Am Schneidwerk angeordnete Ährenheber im richtigen Winkel zum Boden abgesetzt, anstatt sie über einen steilen Winkel, der sich bei sofortiger Entspannung des Messerbalkens einstellen würde, beim Wiedereinsetzen zu gefährden.

Die Aufgabe wird weiterhin durch ein Schneidwerk mit einem in Abhängigkeit von Erntebedingungen mittels einer Aktorik starr oder flexibel betreibbaren Messerbalken gelöst, wobei das Schneidwerk in zumindest zwei unterschiedlichen Betriebsmodi betreibbar ist, und das Schneidwerk eine erste, deaktivierbar an dem Schneidwerk angeordnete, Sensoranordnung zum Betreiben des Schneidwerks in einem ersten Betriebsmodus und eine zweite Sensoranordnung zum Betreiben des Schneidwerks in einem zweiten Betriebsmodus umfasst. Das Schneidwerk ist dadurch gekennzeichnet, dass das Schneidwerk mit einer Steuerungsvorrichtung in Verbindung steht, welche dazu eingerichtet ist, bei einem Wechsel zwischen den zumindest zwei Betriebsmodi in Abhängigkeit von dem gewählten Betriebsmodus die erste Sensoranordnung oder die zweite Sensoranordnung betriebsunterbrechungsfrei zur Durchführung einer Abstandsbestimmung zu aktivieren. Bevorzugt kann das Schneidwerk die Steuerungsvorrichtung umfassen. Dies hat den Vorteil, dass bei wechselnder Verwendung des Schneidwerks mit anderen Erntemaschinen unabhängig von einer zusätzlichen Steuereinheit der Erntemaschine das erfindungsgemäße Verfahren umsetzbar ist. Dessen ungeachtet kann die Steuerungsvorrichtung auch Bestandteil der Erntemaschine sein, mit welcher das Schneidwerk betrieben wird. Der Messerbalken ist an Tragarmen angeordnet, welche schwenkbar am Hauptrahmen des Schneidwerks angelenkt sind. Mittels der Aktorik, welche den jeweiligen Tragarmen zugordnete Hydraulikzylinder umfasst, kann durch eine entsprechende Veränderung der Druckbeaufschlagung dieser Aktorik der Messerbalken starr oder flexibel betrieben werden. Die für den betriebsunterbrechungsfreien Wechsel zwischen den Betriebsmodi erforderlichen Kalibrierdaten der ersten Sensoranordnung und der zweiten Sensoranordnung sind vorzugsweise in der Steuerungsvorrichtung hinterlegt.

Dabei kann die erste Sensoranordnung zumindest zwei den Boden abtastende Vorrichtungen umfassen, die an der dem Boden zugewandten Seite des Schneidwerkes angeordnet sind. Solche den Boden abtastende Vorrichtungen, die lösbar am Schneidwerk befestigt sind, können beispielsweise Tastbügel, Tastkufen oder sonstige Änderungen der Bodenkontur erfassende mechanische Mittel sein. Alternativ kann die den Boden abtastende Vorrichtung auch als eine berührungslos arbeitende Vorrichtung ausgeführt sein.

Insbesondere kann die zweite Sensoranordnung zur Erfassung einer Schwenkbewegung eingerichtet sein, welche von den Messerbalken tragenden Tragarmen des Schneidwerks hervorgerufen wird. Hierzu kann die zweite Sensoranordnung in das Schneidwerk integriert sein.

Des Weiteren kann die die Steuerungsvorrichtung dazu eingerichtet sein, die Aktorik anzusteuern, mittels der der Messerbalken starr oder flexibel betreibbar ist. Dies ermöglicht einen schnellen Wechsel zwischen den Betriebsmodi.

Weiterhin wird die Aufgabe durch einen Mähdrescher mit einem Schneidwerk nach einem der vorangehenden Ansprüche 10 bis 13 gelöst, welches insbesondere durch ein Verfahren nach einem der Ansprüche 1 bis 9 betreibbar ist. Ein Mähdrescher mit einem solchen Schneidwerk ermöglicht einen einfachen Wechsel zwischen den zumindest zwei Betriebsmodi, ohne dass es der manuellen Deaktivierung der ersten Sensoranordnung vor einem Wechsel des Betriebsmodus bedarf. Ebenfalls entfällt der Kalibrieraufwand bei einem jeweiligen Wechsel zwischen den Betriebsmodi.

Die vorliegende Erfindung wird nachstehend anhand von in den Zeichnungen dargestellten Ausführungsbeispielen näher erläutert.

Es zeigen:
- Fig. 1: eine schematische Ansicht eines Schneidwerkes;
- Fig. 2: eine Teilansicht des Schneidwerkes gemäß Fig. 1;
- Fig. 3: ein Flussdiagramm zur Veranschaulichung eines Kalibriervorgangs;
- Fig. 4: ein Flussdiagramm zur Veranschaulichung von Betriebszuständen und Übergängen zwischen den Betriebszuständen.

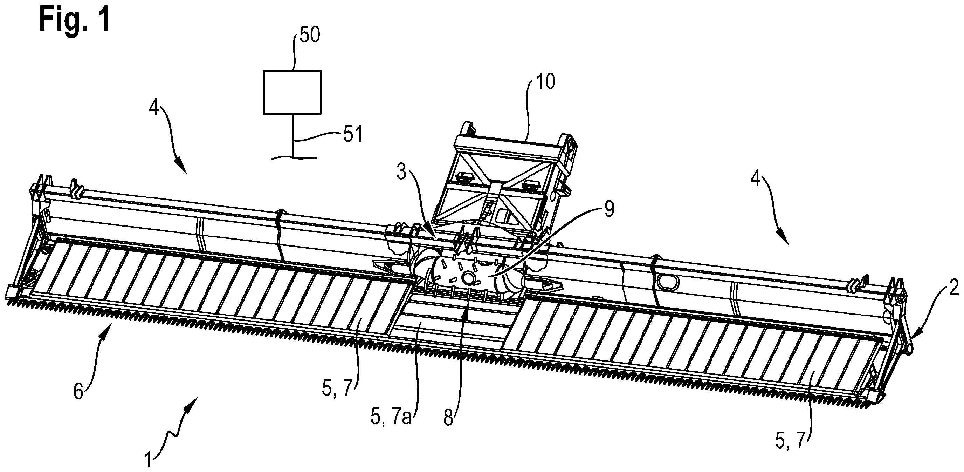

Die Darstellung in Fig. 1 zeigt eine schematische Darstellung eines Schneidwerks 1. Das Schneidwerk 1 weist einen Hauptrahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite des Schneidwerkes 1 ein Messerbalken 6 angeordnet, der sich im Wesentlichen über die gesamte Breite des Schneidwerkes 1 erstreckt. An dem Grundrahmen 2 des Schneidwerkes 1 sind (nicht dargestellte) Haspeln angeordnet, die sich über die Breite eines Seitenabschnittes 4 sowie teilweise über die Breite des Mittenabschnittes 3 erstrecken. Die Haspeln dienen der Verbesserung der Annahme des Erntegutes durch den Messerbalken 6.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Band 7 ausgeführt ist, welches parallel zur Längsachse des Schneidwerks 1 umläuft. Die endlos umlaufenden Bänder 7 sind benachbart zu dem Mittenabschnitt 3 angeordnet, um das von dem Messerbalken 6 abgeschnittene Erntegut parallel zu der Längsachse des Schneidwerkes 1 in Richtung des Mittenabschnittes 3 zu transportieren und einer Einzugsvorrichtung 8 zuzuführen. Der Mittenabschnitt 3 umfasst ebenfalls eine als endlos umlaufendes Förderband 7a ausgebildete Fördervorrichtung 5. Andere Ausgestaltungen der Fördervorrichtung 5 im Mittenabschnitt 3 sind denkbar. Die Einzugsvorrichtung 8 ist als eine antreibbare Einzugswalze 9 ausgeführt. Die Einzugsvorrichtung 8 führt das von den endlosen Bändern 7 dem Mittenabschnitt 3 seitlich zugeführte Erntegut einer in dem Hauptrahmen 2 vorgesehenen, hinter der Einzugswalze 9 befindlichen Öffnung zu, durch welche das Erntegut durch einen an einem nicht dargestellten Mähdrescher befindlichen Einzugskanal 10, an dem das Schneidwerk 1 lösbar befestigt ist, dem Mähdrescher zur weiteren Verarbeitung zugeführt wird.

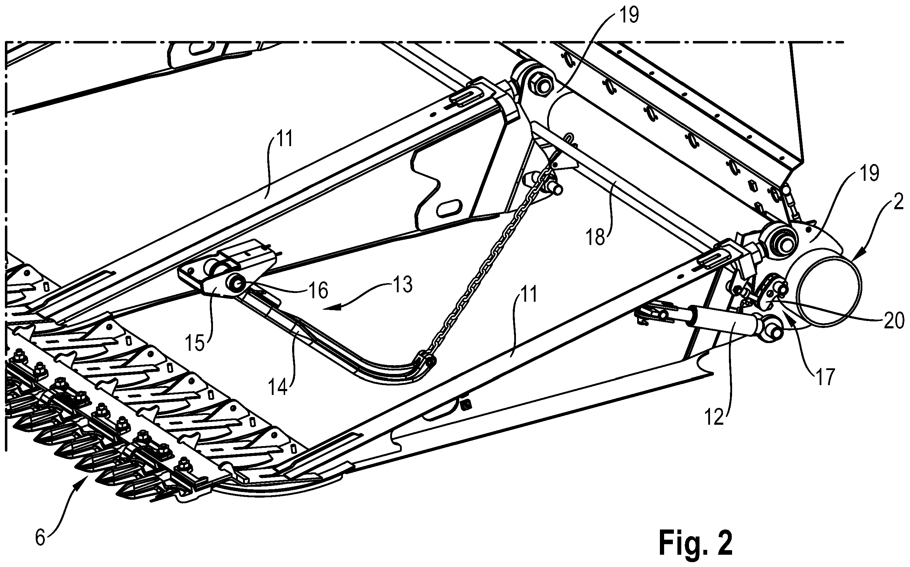

Die Darstellung in Fig. 2 zeigt eine Teilansicht des Schneidwerkes gemäß Fig. 1. An dem Hauptrahmen 2 sind Tragarme 11 um eine horizontale Achse schwenkbar angelenkt. An den Tragarmen 11 ist der Messerbalken 6 angeordnet. Jedem Tragarm 11 ist eine als Hydraulikzylinder 12 ausgeführte Aktorik zugeordnet, mit der der jeweilige Tragarm 11 und mit diesen der Messerbalken 6 in zumindest einem ersten Betriebsmodus und einem zweiten Betriebsmodus betreibbar sind. In dem ersten Betriebsmodus wird der Messerbalken 6 starr betrieben. Hierzu werden die Hydraulikzylinder 12 derart mit einem hydraulischen Druck oberhalb eines ersten Grenzwertes beaufschlagt, dass die einzelnen Tragarme 11 und mit diesen der Messerbalken 6 keine Schwenkbewegung in vertikaler Richtung ausführen können. Das Schneidwerk 1 wird in einem vorgebbaren Abstand zum Boden geführt. Zur Steuerung bzw. Regelung des Abstands respektive der Schnitthöhe wird der Abstand zwischen dem Schneidwerk 1 und dem Boden durch eine erste Sensoranordnung 13 erfasst.

In dem zweiten Betriebsmodus wird der Messerbalken 6 flexibel betrieben. Hierzu werden die Hydraulikzylinder 12 derart mit einem hydraulischen Druck unterhalb eines zweiten Grenzwertes beaufschlagt, dass der Messerbalken 6 mit einer von der Druckbeaufschlagung abhängigen Gewichtskraft auf dem Boden aufliegt. Bei einer Änderung der Bodenkontur, welcher der Messerbalken 6 zumindest abschnittsweise folgt, erfahren die Tragarme 11 eine vertikale Auslenkung. Die vertikale Auslenkung wird mittels einer zweiten Sensoranordnung 17 bestimmt.

Ein dritter Betriebsmodus sieht das flexible Betreiben von Messerbalken 6 und der dem Messerbalken 6 nachgeordneten Fördervorrichtung 5 der Seitenabschnitte 4 vor. In dieser dritten Betriebsart folgen der Messerbalken 6 und die endlos umlaufenden Bänder 7 den Änderungen der Bodenkontur, welche von der zweiten Sensoranordnung 17 erfasst werden.

Die erste Sensoranordnung 13 ist als den Boden abtastende Vorrichtung ausgeführt. Dabei handelt es sich um Tastbügel 14, Tastkufen oder dergleichen, die jeweils mit einem Ende an einer Lagerstelle 15 an zumindest zwei Tragarmen 11 des Schneidwerks 1 um eine horizontale Schwenksachse 16 schwenkbar angeordnet sind. Bevorzugt weist jeder Seitenabschnitt 4 zumindest zwei zueinander beabstandet angeordnete Tastbügel 14 auf. Das freie Ende des jeweiligen Tastbügels 14 liegt auf dem Boden auf. Bei einer Änderung der Bodenkontur, die zu einer Abstandsänderung führt, wird die Auslenkung des jeweiligen Tastbügels 14 um seine Schwenkachse 16 mittels eines diesem zugeordneten Potentiometers erfasst. Das von dem jeweiligen Potentiometer bereitgestellte Signal wird von einer dem Schneidwerk 1 zugeordneten Steuerungsvorrichtung 50 ausgewertet, um eine der Abstandsänderung entsprechende Korrektur vorzunehmen, damit die vorgegebene Höheneinstellung bzw. Schnitthöhe eingehalten wird. Die Steuerungsvorrichtung 50 ist mittels einer Signalleitung 51 mit den Sensoranordnungen 13 bzw. 17 verbunden. Die Tastbügel 14 sind lösbar an den Tragarmen 11 angeordnet, um diese bei Bedarf austauschen zu können.

Die zweite Sensoranordnung 17 ist zur Erfassung der Schwenkbewegung eingerichtet, welche von den Messerbalken 6 tragenden Tragarmen 11 des Schneidwerks 1 hervorgerufen wird, wenn das Schneidwerk 1 in dem zweiten Betriebsmodus betrieben wird. Die zweite Sensoranordnung 17 umfasst eine Welle 18, welche sich im Wesentlichen über die gesamte Breite des jeweiligen Seitenabschnitts 4 erstreckt. Die Welle 18 ist in Konsolen 19, die jedem Tragarm 11 zugeordnet sind, drehbar gelagert. Weiterhin ist eine Hebelanordnung 20 vorgesehen, durch welche die Welle 18 mit dem jeweiligen Tragarm 11 verbunden ist. Die Hebelanordnung 20 dient dazu, die Auslenkung des Tragarmes 11 in vertikaler Richtung auf die Welle 18 zu übertragen. Durch die Hebelanordnung 20 wird bei einer Lageänderung des Tragarmes 11 die Auslenkung des Tragarmes 11 in vertikaler Richtung auf die Welle 18 als eine rotatorische Bewegung übertragen. Die größte vertikale Auslenkung eines Tragarmes 11 an einem Seitenabschnitt 4 resultiert in der stärksten Verdrehung der Welle 18, was als ein Signal für eine automatische Höhenanpassung des Schneidwerkes 1 zur Auswertung herangezogen wird. Hierzu wird das Schneidwerk 1, welches an dem Einzugskanal 10 des Mähdreschers angeordnet ist, durch entsprechende am Einzugskanal 10 und dem Mähdrescher angeordnete Hydraulikzylinder in seiner Höhe derart verstellt werden, dass der Abstand des Hauptrahmens 2 gegenüber dem Boden an allen Seitenabschnitten 4 nahezu gleich ist.

Das Schneidwerk 1 soll in der Weise betrieben werden, dass bei einem Wechsel zwischen den zumindest zwei Betriebsmodi in Abhängigkeit von dem gewählten Betriebsmodus die erste Sensoranordnung 13 oder die zweite Sensoranordnung 17 betriebsunterbrechungsfrei zur Durchführung einer Abstandsbestimmung aktiviert wird. Hierzu bedarf es vor Beginn des Erntevorganges der Kalibrierung der ersten Sensoranordnung 13 und der zweiten Sensoranordnung 17. Die durch die Kalibrierung gewonnen Daten werden in der Steuerungsvorrichtung 50 abrufbar hinterlegt.

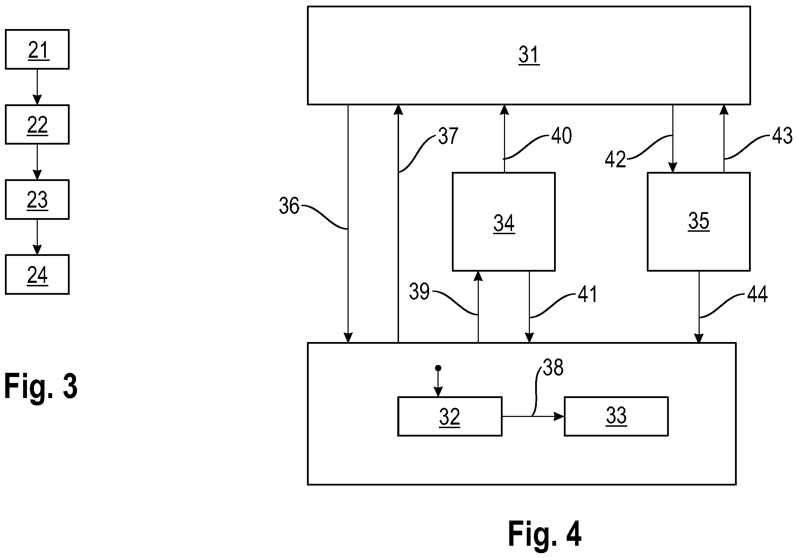

In Fig. 3 ist ein Flussdiagramm zur Veranschaulichung eines Kalibriervorganges oder Lernvorganges dargestellt, bei welchem innerhalb des Kalibriervorganges die erste und die zweite Sensoranordnung 13, 17 kalibriert werden. Der Kalibriervorgang erfolgt dabei unabhängig von dem ausgewählten Betriebsmodus. Hierzu wird im Schritt 21 geprüft, ob die erste Sensoranordnung 13 am Schneidwerk 1 angeordnet ist. Unabhängig vom Vorhandensein der ersten Sensoranordnung 13 wird im Schritt 22 die als Hydraulikzylinder 12 ausgeführte Aktorik von der Steuerungsvorrichtung 50 automatisch angesteuert, um den Messerbalken 6 zu entspannen. In den nachfolgenden Schritten 23 und 24 werden sowohl die oberen und unteren Grenzwerte der zweiten Sensoranordnung 17 für die Auslenkung des Messerbalkens 6 als auch die oberen und unteren Grenzwerte der ersten Sensoranordnung 13 für die Auslenkung der Tastbügel 14, sofern diese am Schneidwerk 1 angebracht sind, gelernt. Hierzu werden die ermittelten Kalibrierungsdaten in der Steuerungsvorrichtung 50 abrufbar hinterlegt. Mit der Bereitstellung der Kalibrierungsdaten für die beiden Sensoranordnungen 13 und 17 kann jederzeit ein Betriebsmoduswechsel durchgeführt werden, ohne erneut einen Kalibriervorgang durchführen zu müssen.

Nachstehend wird beispielhaft beschrieben, wie nach erfolgter einmaliger Kalibrierung ein Betriebsmoduswechsel im Erntebetrieb des Schneidwerkes 1 ausgeführt wird. Ausgegangen wird von dem ersten Betriebsmodus, welcher den Betrieb des Schneidwerkes 1 mit starr betriebenem Messerbalken 6 verkörpert, der bei der Ernte von stängeligem Erntegut, wie Getreide, zum Tragen kommt. Eine Bedienperson gibt im Rahmen dieses Betriebsmodus eine Schnitthöhe vor. Die Einhaltung der Schnitthöhe wird anhand der mittels der ersten Sensoranordnung 13 bestimmten Abstandsänderungen zum Boden gesteuert bzw. geregelt. Die zweite Sensoranordnung 17 ist deaktiviert, das heißt eine Verarbeitung von durch die zweite Sensoranordnung 17 erfassten Signalen durch die Steuerungsvorrichtung 50 findet nicht statt.

Erreicht die Erntemaschine einen Lagerbestand, das heißt auf dem Boden liegendes stängeliges Erntegut, ermöglicht die voreingestellte Schnitthöhe des ersten Betriebsmodus nicht das Ernten dieses Teilbestands. Hier ermöglicht der unterbrechungsfreie Wechsel vom ersten Betriebsmodus in den zweiten Betriebsmodus eine Änderung des Betriebsverhaltens des Schneidwerkes 1 in der Weise, dass der Messerbalken 6 flexibel betrieben wird.

In einem ersten Verfahrensschritt werden die Tastbügel 14 auf einen minimalen Sollwert geregelt. Anschließend wird der Messerbalken 6 durch entsprechende Ansteuerung der Aktorik, das heißt der Hydraulikzylinder 12, entspannt. Mit dem Passieren des zweiten Grenzwertes für den Druck, mit welchem die Hydraulikzylinder 12 an den Tragarmen 11 beaufschlagt werden, wird durch die Steuerungsvorrichtung 50 die erste Sensoranordnung 13 deaktiviert, das heißt eine Verarbeitung von durch die erste Sensoranordnung 13 erfassten Signalen durch die Steuerungsvorrichtung 50 findet nicht mehr statt. Stattdessen wird die zweite Sensoranordnung 17 aktiviert, das heißt von dieser bereitgestellte eine Abstandsänderung durch Auslenkung des Messerbalkens 6 repräsentierende Signale werden zur Höheneinstellung von der Steuerungsvorrichtung 50 verarbeitet. Ein Wechsel vom ersten Betriebsmodus in den zweiten Betriebsmodus ist auch dann sinnvoll, wenn aufgrund der Bodenbeschaffenheit bzw. der Bodenkontur das Ernten mit starr betriebenem Messerbalken 6 über die gesamte Arbeitsbreite des Schneidwerks 1 nicht möglich ist.

Mit dem Verlassen des Bereichs mit Lagerbestand an Erntegut wechselt die Bedienperson den Betriebsmodus erneut. Indem der Sollwert für die Tastbügel 14 wieder auf die ursprünglich eingestellt Schnitthöhe zurückstellt, wird der unterbrechungsfreie Übergang von der Verwendung der zweiten Sensoranordnung 17 zurück auf die erste Sensoranordnung 13 initiiert. Zugleich wird der Messerbalken 6 wieder durch eine Ansteuerung der Aktorik, das heißt Druckbeaufschlagung der Hydraulikzylinder 12, gespannt, um diesen starr betreiben zu können.

Ein weiterer Aspekt des erfindungsgemäßen Verfahrens ist, dass bei einem Betrieb im zweiten Betriebsmodus oder dritten Betriebsmodus beim Erreichen einer Höhenposition des Schneidwerkes 1 oberhalb einer Arbeitsposition, wie beispielsweise am Vorgewende oder durch manuelles Ausheben des Schneidwerks 1, die Steuerungsvorrichtung 50 die Aktorik automatisch in der Weise ansteuert, dass der Messerbalken 6 starr betrieben wird. Dies gewährleistet einen optimalen bzw. minimalen Abstand zwischen Haspel und Schneidwerkstisch und erlaubt der Haspel den Gutfluss optimal zu unterstützen. Diese Funktion unterstützt auch beim Wiedereinsetzen des Vorsatzes in den Bestand, da der Messerbalken 6 durch die entsprechende Ansteuerung der Aktorik durch die Steuerungsvorrichtung 50 erst kurz vor dem Boden entspannt, das heißt wieder flexibel betrieben wird, was mittels der ersten Sensoranordnung 13 detektiert wird. Hierdurch werden beispielsweise die Ährenheber im richtigen Winkel zum Boden abgesetzt, anstatt sie über einen steilen Winkel, der sich bei einer sofortigen Entspannung des Messerbalkens 6 einstellen würde, beim Wiedereinsetzen zu gefährden.

In Fig. 4 ist ein Flussdiagramm zur Veranschaulichung von möglichen Betriebszuständen und Übergängen zwischen diesen dargestellt. Mit 31 ist ein Zustand des Schneidwerkes 1 als Ausgangszustand bezeichnet, in welchem der Messerbalken 6 starr betrieben wird. Das Schneidwerk 1 wird in dem ersten Betriebsmodus betrieben. Die Einhaltung der Schnitthöhe bzw. der Abstand des Schneidwerks 1 zum Boden wird mittels der Tastbügel 14 der ersten Sensoranordnung 13 überwacht.

Mit 32 ist ein Zustand des Schneidwerks 1 bezeichnet, in welchem das Schneidwerk 1 in den zweiten Betriebsmodus überführt wird, in dem der Messerbalken 6 flexibel betrieben wird. Hierzu wird die Aktorik durch die Steuerungsvorrichtung 50 in der Weise angesteuert, dass die Hydraulikzylinder 12 mit einem hydraulischen Druck unterhalb des zweiten Grenzwertes beaufschlagt werden. In diesem Zustand 32 wird die Einhaltung der Schnitthöhe anhand der mittels der ersten Sensoranordnung 13 bestimmten Abstandsänderungen zum Boden gesteuert bzw. geregelt.

Mit 36 ist ein Übergangsschritt vom Zustand 31 zum Zustand 32 bezeichnet, welcher in Abhängigkeit vom eingestellten Sollwert der Schnitthöhenregelung initiiert wird. Wie bereits weiter oben ausgeführt, führt das Einstellen eines minimalen Sollwertes für den Tastbügel 14 dazu, dass der Übergang vom ersten Betriebsmodus in den zweiten Betriebsmodus eingeleitet wird.

Mit 37 ist ein Übergangsschritt vom Zustand 32 zum Zustand 31 bezeichnet, welcher in Abhängigkeit vom eingestellten Sollwert der Schnitthöhenregelung oder alternativ durch das Anheben des Schneidwerks 1 über die Arbeitsposition hinaus initiiert wird. Der Übergangsschritt 37 vom zweiten Betriebsmodus in den ersten Betriebsmodus erfolgt somit durch das Verändern des Sollwertes der Schnitthöhenregelung von einem minimalen Sollwert auf den für den ersten Betriebsmodus eingestellten Sollwert der Schnitthöhe oder das manuelle Ausheben des Schneidwerks 1.

Mit 33 ist der Zustand des Schneidwerks 1 bezeichnet, in welchem der Messerbalken 6 gemäß dem zweiten Betriebsmodus betrieben wird, wobei die Höhensteuerung mittels der zweiten Sensoranordnung 17 durchgeführt wird. Im Übergangsschritt 38 wird hierzu der Istwert des Hydraulikdrucks durch die Steuerungsvorrichtung 50 überwacht, mit welchem die Hydraulikzylinder 12 der Tragarme 11 beaufschlagt werden. Mit dem Passieren des zweiten Grenzwertes für den Druck, mit welchem die Hydraulikzylinder 12 beaufschlagt werden, wird durch die Steuerungsvorrichtung 50 die erste Sensoranordnung 13 deaktiviert und die zweite Sensoranordnung 17 aktiviert.

Mit 34 ist der Zustand des Schneidwerks 1 bezeichnet, in welchem das Schneidwerk 1 in einem weiteren Betriebsmodus betrieben wird. In diesem weiteren Betriebsmodus wird das Schneidwerk 1 manuell durch einen Eingriff einer Bedienperson angehoben. Dieser Betriebsmodus kann bei einem Erreichen eines Vorgewendes zum Tragen kommen.

Mit 39 ist ein Übergangsschritt vom Zustand 33 zum Zustand 34 bezeichnet, welcher mit dem Anheben des Schneidwerkes 1 initiiert wird. Gemäß diesem Übergangsschritt 39 wird durch die Steuerungsvorrichtung 50 das Überschreiten eines Schwellwertes des Istwertes der Schnitthöhe überwacht. Mit dem Überschreiten des Schwellwertes für die Schnitthöhe wird ein weiterer, zeitabhängiger Schwellwert von der Steuerungsvorrichtung 50 überwacht. Die Steuerungsvorrichtung 50 überwacht die Dauer der Überschreitung des Schwellwertes für die Schnitthöhe.

Wird dieser zeitabhängige Schwellwert ebenfalls Überschritten, wird von der Steuerungsvorrichtung 50 ein Übergangsschritt 40 eingeleitet. Das Schneidwerk 1 wird in den ersten Betriebsmodus gemäß dem Zustand 31 überführt. Dazu wird die Aktorik durch die Steuerungsvorrichtung 50 entsprechend angesteuert, um den Messerbalken 6 starr zu betreiben. Des Weiteren erfolgen die automatische Deaktivierung der zweiten Sensoranordnung 17 und die Aktivierung der ersten Sensoranordnung 13 durch die Steuerungsvorrichtung 50. Der Übergangsschritt 40 wird positions- und zeitabhängig gesteuert.

Mit 41 ist ein Übergangsschritt vom Zustand 34 zurück zum Zustand 33 bezeichnet, welcher nach einem Anheben des Schneidwerkes 1 initiiert wird, wenn die Dauer des Anhebens des Schneidwerkes 1 den zeitabhängigen Schwellwert nicht überschreitet. Während des Übergangschrittes 41 hat noch keine Änderung des Betriebsmodus stattgefunden.

Mit 35 ist der Zustand des Schneidwerks 1 bezeichnet, in welchem das Schneidwerk 1 in einem weiteren Betriebsmodus betrieben wird. In diesem weiteren Betriebsmodus wird das Schneidwerk 1 manuell durch einen Eingriff einer Bedienperson abgesenkt. Dieser Betriebsmodus kann nach einem Durchfahren eines Vorgewendes zum Tragen kommen, bevor das Schneidwerk 1 wieder in den zu erntenden Bestand eingesetzt wird.

Mit 42 ist ein Übergangsschritt vom Zustand 31 zum Zustand 35 bezeichnet, welcher mit dem manuellen Absenken des Schneidwerkes 1 initiiert wird. Gemäß diesem Übergangsschritt 42 wird durch die Steuerungsvorrichtung 50 das Unterschreiten eines Schwellwertes des Istwertes der Schnitthöhe bei gleichzeitigem manuellem Absenken des Schneidwerks 1 überwacht.

Mit dem Erreichen des Zustands 35 wird ein weiterer, zeitabhängiger Schwellwert von der Steuerungsvorrichtung 50 überwacht. Die Steuerungsvorrichtung 50 überwacht die Dauer der Unterschreitung des Schwellwertes für die Schnitthöhe. Wird dieser zeitabhängige Schwellwert ebenfalls Unterschritten, wird von der Steuerungsvorrichtung 50 ein Übergangsschritt 44 eingeleitet. Das Schneidwerk 1 wird von dem ersten Betriebsmodus gemäß dem Zustand 31 in den zweiten Betriebsmodus gemäß dem Zustand 33 überführt. Dazu wird die Aktorik durch die Steuerungsvorrichtung 50 entsprechend angesteuert, um den Messerbalken 6 flexibel zu betreiben. Des Weiteren erfolgen die automatische Deaktivierung der ersten Sensoranordnung 13 und die Aktivierung der zweiten Sensoranordnung 17 durch die Steuerungsvorrichtung 50. Der Übergangsschritt 44 wird ebenfalls positions- und zeitabhängig gesteuert.

Mit 43 ist ein Übergangsschritt vom Zustand 35 zurück zum Zustand 31 bezeichnet, welcher nach einem Absenken des Schneidwerkes 1 initiiert wird, wenn die Dauer des Absenkens des Schneidwerkes 1 den zeitabhängigen Schwellwert nicht überschreitet. Während des Übergangschrittes 43 hat noch keine Änderung des Betriebsmodus stattgefunden.

Grundsätzlich ist dieses Verfahren auch anwendbar, wenn das Heben und Senken des Schneidwerks 1 automatisiert durchgeführt wird. Das Erreichen und Verlassen beispielsweise eines Vorgewendes kann mittels eines Positionsortungssystems bestimmt werden, so dass auch die Wechsel zwischen den Betriebsmodi automatisiert erfolgen können.

**Bezugszeichenliste**

| | | | |
|---|---|---|---|
| 1 | Schneidwerk | 35 | Zustand |
| 2 | Hauptrahmen | 36 | Übergangsschritt |
| 3 | Mittenabschnitt | 37 | Übergangsschritt |
| 4 | Seitenabschnitt | 38 | Übergangsschritt |
| 5 | Fördervorrichtung | 39 | Übergangsschritt |
| 6 | Messerbalken | 40 | Übergangsschritt |
| 7 | Band | 41 | Übergangsschritt |
| 7a | Förderband | 42 | Übergangsschritt |
| 8 | Einzugsvorrichtung | 43 | Übergangsschritt |
| 9 | Einzugswalze | 44 | Übergangsschritt |
| 10 | Einzugskanal | | |
| 11 | Tragarm | | |
| 12 | Hydraulikzylinder | | |
| 13 | Erste Sensoranordnung | | |
| 14 | Tastbügel | | |
| 15 | Lagerstelle | | |
| 16 | Schwenkachse | | |
| 17 | Zweite Sensoranordnung | | |
| 18 | Welle | | |
| 19 | Konsole | | |
| 20 | Hebelanordnung | | |
| 21 | Schritt | | |
| 22 | Schritt | | |
| 23 | Schritt | | |
| 24 | Schritt | | |
| 31 | Zustand | | |
| 32 | Zustand | | |
| 33 | Zustand | | |
| 34 | Zustand | | |

## Patentansprüche

1. Verfahren zum Betreiben eines Schneidwerks (1) mit einem in Abhängigkeit von Erntebedingungen starr oder flexibel betriebenen Messerbalken (6), welches in zumindest zwei unterschiedlichen Betriebsmodi betreibbar ist, wobei das Schneidwerk (1) eine erste, deaktivierbar an dem Schneidwerk (1) angeordnete, Sensoranordnung (13) zum Betreiben des Schneidwerks (1) in einem ersten Betriebsmodus und eine zweite Sensoranordnung (17) zum Betreiben des Schneidwerks (1) in einem zweiten Betriebsmodus umfasst, wobei der Messerbalken (6) im ersten Betriebsmodus starr betrieben wird, wobei er in einer voreingestellten Schnitthöhe über den Boden geführt wird, wobei der Messerbalken (6) im zweiten Betriebsmodus flexibel betrieben wird, wobei er auf einem Boden aufliegt, um einer Bodenkontur zu folgen, während ein Schneidwerksrahmen des Schneidwerks (1) in einem vorgegebenen Abstand zum Boden geführt wird, **dadurch gekennzeichnet, dass** bei einem Wechsel zwischen den zumindest zwei Betriebsmodi in Abhängigkeit von dem gewählten Betriebsmodus die erste Sensoranordnung (13) oder die zweite Sensoranordnung (17) betriebsunterbrechungsfrei zur Durchführung einer Abstandsbestimmung aktiviert wird.

2. Verfahren nach Anspruch 1, **dadurch gekennzeichnet, dass** ein Kalibriervorgang für die erste Sensoranordnung (13) und die zweite Sensoranordnung (17) unabhängig von dem gewählten Betriebsmodus ausgeführt wird.

3. Verfahren nach Anspruch 1, **dadurch gekennzeichnet, dass** eine Kalibrierung der ersten Sensoranordnung (13) und der zweiten Sensoranordnung (17) unabhängig voneinander durchgeführt wird.

4. Verfahren nach einem der vorangehenden Ansprüche, **dadurch gekennzeichnet, dass** beide Sensoranordnungen (13, 17) gleichzeitig betrieben werden, wobei entsprechend des gewählten Betriebsmodus entweder nur von der ersten Sensoranordnung (13) oder nur von der zweiten Sensoranordnung (17) bereitgestellte Eingangssignale zur Höhensteuerung des Schneidwerks (1) verarbeitet werden.

5. Verfahren nach einem der vorangehenden Ansprüche, **dadurch gekennzeichnet, dass** in dem ersten Betriebsmodus, in welchem das Schneidwerk (1) mit starrem Messerbalken (6) betrieben wird, die erste Sensoranordnung (13) aktiviert wird, durch die eine vorgegebene Höheneinstellung des Schneidwerks (1) gesteuert oder geregelt wird.

6. Verfahren nach einem der vorangehenden Ansprüche, **dadurch gekennzeichnet, dass** in dem zweiten Betriebsmodus, in welchem das Schneidwerk (1) mit flexiblem Messerbalken (6) betrieben wird, die zweite Sensoranordnung (17) aktiviert wird, durch die eine vorgegebene Höheneinstellung eines Schneidwerkrahmens des Schneidwerks (1) gesteuert oder geregelt wird.

7. Verfahren nach einem der vorangehenden Ansprüche, **dadurch gekennzeichnet, dass** bei einem Betreiben des Schneidwerks (1) oberhalb der vorgegebenen Höheneinstellung der Messerbalken (6) unabhängig von dem ausgewählten Betriebsmodus automatisch in einen starren Zustand überführt wird.

8. Verfahren nach einem der vorangehenden Ansprüche, **dadurch gekennzeichnet, dass** bei einem Betreiben des Schneidwerks (1) mit flexibel betriebenem Messerbalken (6) oberhalb der vorgegebenen Höheneinstellung die erste Sensoranordnung (13) zeitabhängig aktiviert wird.

9. Verfahren nach einem der vorangehenden Ansprüche, **dadurch gekennzeichnet, dass** bei einem Betreiben des Schneidwerks (1) unterhalb eines Schwellwertes der vorgegebenen Höheneinstellung der Messerbalken (6) unabhängig von dem ausgewählten Betriebsmodus automatisch in einen flexiblen Zustand überführt wird.

10. Verfahren nach einem der vorangehenden Ansprüche, **dadurch gekennzeichnet, dass** bei einem Betreiben des Schneidwerks (1) mit flexibel betriebenem Messerbalken (6) unterhalb eines Schwellwertes der vorgegebenen Höheneinstellung die zweite Sensoranordnung (17) zeitabhängig aktiviert wird.

11. Schneidwerk mit einem in Abhängigkeit von Erntebedingungen mittels einer Aktorik (12) starr oder flexibel betreibbaren Messerbalken (6), wobei das Schneidwerk (1) in zumindest zwei unterschiedlichen Betriebsmodi betreibbar ist und das Schneidwerk (1) eine erste, deaktivierbar an dem Schneidwerk angeordnete, Sensoranordnung (13) zum Betreiben des Schneidwerks (1) in einem ersten Betriebsmodus und eine zweite Sensoranordnung (17) zum Betreiben des Schneidwerks (1) in einem zweiten Betriebsmodus umfasst, wobei der Messerbalken (6) im ersten Betriebsmodus starr betrieben wird, wobei er in einer voreingestellten Schnitthöhe über den Boden geführt wird, wobei der Messerbalken (6) im zweiten Betriebsmodus flexibel betrieben wird, wobei er auf einem Boden aufliegt, um einer Bodenkontur zu folgen, während ein Schneidwerksrahmen des Schneidwerks (1) in einem vorgegebenen Abstand zum Boden geführt wird, **dadurch gekennzeichnet, dass** das Schneidwerk (1) mit einer Steuerungsvorrichtung (50) in Verbindung steht, welche dazu eingerichtet ist, bei einem Wechsel zwischen den zumindest zwei Betriebsmodi in Abhängigkeit von dem gewählten Betriebsmodus die erste Sensoranordnung (13) oder die zweite Sensoranordnung (17) betriebsunterbrechungsfrei zu aktivieren.

12. Schneidwerk (1) nach Anspruch 11, **dadurch gekennzeichnet, dass** die erste Sensoranordnung (13) zumindest zwei den Boden abtastende Vorrichtungen (14) umfasst, welche an der dem Boden zugewandten Seite des Schneidwerks (1) angeordnet sind.

13. Schneidwerk (1) nach einem der Ansprüche 11 und 12, **dadurch gekennzeichnet, dass** die zweite Sensoranordnung (17) zur Erfassung einer Schwenkbewegung eingerichtet ist, welche von den Messerbalken (6) tragenden Tragarmen (11) des Schneidwerks (1) hervorgerufen wird.

14. Schneidwerk (1) nach einem der Ansprüche 11-13, **dadurch gekennzeichnet, dass** die Steuerungsvorrichtung (50) dazu eingerichtet ist, die Aktorik (12) anzusteuern, mittels der der Messerbalken (6) starr oder flexibel betreibbar ist.

15. Mähdrescher mit einem Schneidwerk (1) nach einem der vorangehenden Ansprüche 11-14, welches insbesondere durch ein Verfahren nach einem der Ansprüche 1 bis 10 betreibbar ist.

## Claims

1. A method of operating a cutting unit (1) having a cutter bar (6) which is operated rigidly or flexibly in dependence on harvest conditions and which is operable in at least two different modes of operation, wherein the cutting unit (1) has a first sensor arrangement (13) arranged deactivatably on the cutting unit (1) for operation of the cutting unit (1) in a first mode of operation and a second sensor arrangement (17) for operation of the cutting unit (1) in a second mode of operation, wherein the cutter bar (6) is operated rigidly in the first mode of operation, wherein it is guided in a preset cutting height over the ground, wherein the cutter bar (6) is operated flexibly in the second mode of operation, wherein it rests on a ground in order to follow a ground contour while a cutting unit frame of the cutting unit (1) is guided at a predetermined spacing relative to the ground, **characterised in that** upon a change between the at least two modes of operation in dependence on the selected mode of operation the first sensor arrangement (13) or the second sensor arrangement (17) is activated without an interruption in operation for carrying out a process of determining the spacing.

2. A method according to claim 1 **characterised in that** a calibration operation for the first sensor arrangement (13) and the second sensor arrangement (17) is carried out independently of the selected mode of operation.

3. A method according to claim 1 **characterised in that** a calibration operation for the first sensor arrangement (13) and the second sensor arrangement (17) is carried out independently of each other.

4. A method according to one of the preceding claims **characterised in that** both sensor arrangements (13, 17) are operated simultaneously, wherein in accordance with the selected mode of operation either only input signals provided by the first sensor arrangement (13) or only input signals provided by the second sensor arrangement (17) are processed for heightwise control of the cutting unit (1).

5. A method according to one of the preceding claims **characterised in that** in the first mode of operation in which the cutting unit (1) is operated with the rigid cutter bar (6) the first sensor arrangement (13) is activated, by which a preset height adjustment of the cutting unit (1) is open-loop or closed-loop controlled.

6. A method according to one of the preceding claims **characterised in that** in the second mode of operation in which the cutting unit (1) is operated with the flexible cutter bar (6) the second sensor arrangement (17) is activated, by which a preset height adjustment of a cutting unit frame of the cutting unit (1) is open-loop or closed-loop controlled.

7. A method according to one of the preceding claims **characterised in that** upon operation of the cutting unit (1) above the preset height adjustment the cutter bar (6) is automatically transferred into a rigid state independently of the selected mode of operation.

8. A method according to one of the preceding claims **characterised in that** upon operation of the cutting unit (1) with the flexibly operated cutter bar (6) above the preset height adjustment the first sensor arrangement (13) is activated in time-dependent relationship.

9. A method according to one of the preceding claims **characterised in that** upon operation of the cutting unit (1) below a threshold value of the preset height adjustment the cutter bar (6) is automatically transferred into a flexible state independently of the selected mode of operation.

10. A method according to one of the preceding claims **characterised in that** upon operation of the cutting unit (1) with the flexibly operated cutter bar (6) below a threshold value of the preset height adjustment the second sensor arrangement (17) is activated in time-dependent relationship.

11. A cutting unit (1) having a cutter bar (6) operable rigidly or flexibly by means of an actuator system (12), wherein the cutting unit (1) is operable in at least two different modes of operation, wherein the cutting unit (1) has a first sensor arrangement (13) arranged deactivatably on the cutting unit (1) for operation of the cutting unit (1) in a first mode of operation and a second sensor arrangement (17) for operation of the cutting unit (1) in a second mode of operation, wherein the cutter bar (6) is operated rigidly in the first mode of operation, wherein it is guided in a preset cutting height over the ground, wherein the cutter bar (6) is operated flexibly in the second mode of operation, wherein it rests on a ground in order to follow a ground contour while a cutting unit frame of the cutting unit (1) is guided at a predetermined spacing relative to the ground, **characterised in that** the cutting unit (1) is connected to a control device (50) adapted upon a change between the at least two modes of operation in dependence on the selected mode of operation to activate the first sensor arrangement (13) or the second sensor arrangement (17) without an interruption in operation.

12. A cutting unit according to claim 11 **characterised in that** the first sensor arrangement (13) includes at least two devices (14) which sense the ground and which are arranged at the side of the cutting unit (1), that is towards the ground.

13. A cutting unit (1) according to one of claims 11 and 12 **characterised in that** the second sensor arrangement (17) is adapted to detect a pivotal movement which is caused by carrier arms (11) of the cutting unit (1), that carry the cutter bar (6).

14. A cutting unit (1) according to one of claims 11 to 13 **characterised in that** the control device (50) is adapted to actuate the actuator system (12), by means of which the cutter bar (6) is operable rigidly or flexibly.

15. A combine harvester comprising a cutting unit (1) according to one of the preceding claims which is operable in particular by a method according to one of claims 1 to 10.

## Revendications

1. Procédé pour exploiter un tablier de coupe (1) comprenant une barre porte-lames (6) qui est exploitée de manière rigide ou flexible en fonction des conditions de récolte et qui est exploitable dans au moins deux modes d'exploitation différents, le tablier de coupe (1) incluant un premier agencement de capteurs (13) disposé de manière désactivable sur le tablier de coupe (1) pour exploiter le tablier de coupe (1) dans un premier mode d'exploitation, et un second agencement de capteurs (17) pour exploiter le tablier de coupe (1) dans un second mode d'exploitation, la barre porte-lames (6) étant exploitée de manière rigide dans le premier mode d'exploitation, celle-ci étant guidée à une hauteur de coupe préréglée au-dessus du sol, la barre porte-lames (6) étant exploitée de manière flexible dans le second mode d'exploitation, celle-ci reposant sur le sol pour suivre un contour du sol tandis qu'un cadre de tablier de coupe du tablier de coupe (1) est guidé à une distance prédéfinie par rapport au sol, **caractérisé en ce que**, lors d'un passage entre les au moins deux modes d'exploitation, en fonction du mode d'exploitation choisi, le premier agencement de capteurs (13) ou le second agencement de capteurs (17) est activé sans interruption de l'exploitation pour réaliser une détermination de distance.

2. Procédé selon la revendication 1, **caractérisé en ce qu'**une opération d'étalonnage est effectuée pour le premier agencement de capteurs (13) et pour le second agencement de capteurs (17) indépendamment du mode d'exploitation choisi.

3. Procédé selon la revendication 1, **caractérisé en ce qu'**un étalonnage du premier agencement de capteurs (13) et du second agencement de capteurs (17) est réalisé indépendamment l'un de l'autre.

4. Procédé selon une des revendications précédentes, **caractérisé en ce que** les deux agencement de capteurs (13, 17) sont exploités simultanément, en fonction du mode d'exploitation choisi, des signaux d'entrée fournis soit seulement par le premier agencement de capteurs (13), soit seulement par le second agencement de capteurs (17) étant traités pour commander la hauteur du tablier de coupe (1).

5. Procédé selon une des revendications précédentes, **caractérisé en ce que**, dans le premier mode d'exploitation, dans lequel le tablier de coupe (1) est exploité avec une barre porte-lames (6) rigide, le premier agencement de capteurs (13) est activé et permet de commander ou de réguler un réglage de hauteur prédéfini du tablier de coupe (1).

6. Procédé selon une des revendications précédentes, **caractérisé en ce que**, dans le second mode d'exploitation, dans lequel le tablier de coupe (1) est exploité avec une barre porte-lames flexible (6), le second agencement de capteurs (17) est activé et permet de commander ou de réguler le réglage de hauteur prédéfini d'un cadre de tablier de coupe du tablier de coupe (1).

7. Procédé selon une des revendications précédentes, **caractérisé en ce qu'**en cas d'exploitation du tablier de coupe (1) au-dessus du réglage de hauteur prédéfini, la barre porte-lames (6) est transférée automatiquement dans un état fixe indépendamment du mode d'exploitation choisi.

8. Procédé selon une des revendications précédentes, **caractérisé en ce qu'**en cas d'exploitation du tablier de coupe (1) avec une barre porte-lames (6) exploitée de manière flexible au-dessus du réglage de hauteur prédéfini, le premier agencement de capteurs (13) est activé en fonction du temps.

9. Procédé selon une des revendications précédentes, **caractérisé en ce qu'**en cas d'exploitation du tablier de coupe (1) au-dessous d'une valeur seuil du réglage de hauteur prédéfini, la barre porte-lames (6) est transférée automatiquement du mode d'exploitation choisi à un état flexible.

10. Procédé selon une des revendications précédentes, **caractérisé en ce qu'**en cas d'exploitation du tablier de coupe (1) avec barre porte-lames (6) exploitée de manière flexible au-dessous d'une valeur seuil du réglage de hauteur prédéfini, le second agencement de capteurs (17) est activé en fonction du temps.

11. Tablier de coupe comprenant une barre porte-lames (6) exploitable de manière rigide ou flexible en fonction de conditions de récolte au moyen d'un ensemble actionneur (12), le tablier de coupe (1) étant exploitable dans au moins deux modes d'exploitation différents, et le tablier de coupe (1) incluant un premier agencement de capteurs (13) disposé de manière désactivable sur le tablier de coupe (1) pour exploiter le tablier de coupe (1) dans un premier mode d'exploitation, et un second agencement de capteurs (17) pour exploiter le tablier de coupe (1) dans un second mode d'exploitation, la barre porte-lames (6) étant exploitée de manière rigide dans le premier mode d'exploitation, celle-ci étant guidée à une hauteur de coupe préréglée au-dessus du sol, la barre porte-lames (6) étant exploitée de manière flexible dans le second mode d'exploitation, celle-ci reposant sur le sol pour suivre un contour du sol tandis qu'un cadre de tablier de coupe du tablier de coupe (1) est guidé à une distance prédéfinie par rapport au sol tandis qu'un cadre de tablier de coupe du tablier de coupe (1) est guidé à une distance prédéfinie par rapport au sol, **caractérisé en ce que** le tablier de coupe (1) est en liaison avec un dispositif de commande (50) qui, lors d'un passage entre les au moins deux modes d'exploitation, en fonction du mode d'exploitation choisi, est agencé pour actionner le premier agencement de capteurs (13) ou le second agencement de capteurs (17) sans interruption de l'exploitation.

12. Tablier de coupe (1) selon la revendication 11, **caractérisé en ce que** le premier agencement de capteurs (13) comprend au moins deux dispositifs (14) qui palpent le sol et qui sont disposés sur le côté du tablier de coupe (1) tourné vers le sol.

13. Tablier de coupe (1) selon une des revendications 11 et 12, **caractérisé en ce que** le second agencement de capteurs (17) est agencé pour détecter un mouvement pivotant qui est provoqué par les bras porteurs (11) du tablier de coupe (1) qui portent la barre porte-lames (6).

14. Tablier de coupe (1) selon une des revendications 11-13, **caractérisé en ce que** le dispositif de commande (50) est agencé de façon à commander l'ensemble actionneur (12) au moyen duquel la barre porte-lames (6) est exploitable de manière rigide ou flexible.

15. Moissonneuse-batteuse comprenant un tablier de coupe (1) selon une des revendications précédentes 11-14, lequel est exploitable en particulier par l'intermédiaire d'un procédé selon une des revendications 1 à 10.
